# EUROPÄISCHE PATENTSCHRIFT

(11) **EP 0 990 103 B1**
(45) Veröffentlichungstag und Bekanntmachung des Hinweises auf die Patenterteilung: **07.05.2003**
(21) Anmeldenummer: 98936373.4
(22) Anmeldetag: 18.06.1998
(51) Int. Cl.: F17C 13/04

(54) **FÜLLANSCHLUSS FÜR GASFLASCHENVENTILE**
FILLING CONNECTION FOR A GAS BOTTLE VALVE
RACCORDEMENT DE REMPLISSAGE DESTINE A UNE VALVE DE BOUTEILLE DE GAZ

(30) Priorität: 18.06.1997 DE 29710553 U
(43) Veröffentlichungstag der Anmeldung: 05.04.2000
(73) Patentinhaber: Weh, Erwin, D-89257 Illertissen (DE); WEH, Wolfgang, D-89257 Illertissen (DE)
(72) Erfinder: Weh, Erwin, D-89257 Illertissen (DE); WEH, Wolfgang, D-89257 Illertissen (DE)
(74) Vertreter: Fiener, Josef
(86) Internationale Anmeldenummer: EP9803734
(87) Internationale Veröffentlichungsnummer: WO98058206

(56) Entgegenhaltungen:
- DE-A- 4 334 182
- US-A- 4 586 634
- US-A- 5 566 713

## Beschreibung

Die Erfindung betrifft einen Füllanschluß für Gasflaschenventile gemäß den oberbegrifflichen Merkmalen des Anspruches 1.

Ein derartiger Füllanschluß mit einem separaten Befüllstutzen für Gasflaschenventile ist aus der DE-A-43 34 182 bekannt. Weiterhin ist aus dem DE-GM 91 15 142 ein Füllanschluß für Gasflaschenventile, insbesondere von Azetylenflaschen, bekannt, mit dem schnell und zuverlässig auch von Nichtfachleuten ein sicherer Anschluß hergestellt und wieder gelöst werden kann, da bei üblichen Füllanschlüssen die Ansetzstellung des Füllanschlusses sorgfältig zu kontrollieren ist, was jedoch für Laien recht umständlich und aufwendig sein kann. Demgemäß wird bei diesem Stand der Technik eine klammerartige Anschlußkupplung vorgeschlagen, in der eine Flaschenventil-Anschlußkolbenhülse gelagert ist und in Richtung eines Ansetzringes vorgespannt ist.

Nach Anschluß an das Flaschenventil wird der Fülldurchlaß durch das Gehäuse bzw. den Ventilkörper freigegeben. Nach dem Anschluß der Befüllkupplung an den Anschlußstutzen, der dann später zugleich als Entnahmeanschluß dient, muß jedoch zusätzlich das Gasflaschenventil mittels des üblicherweise als Betätigungselement vorgesehenen Handrades geöffnet werden, sowie nach der Befüllung wiederum geschlossen werden. Neben der Betätigung der Befüllkupplung sind somit zumindest zwei weitere Handgriffe erforderlich, die bei der Serienbefüllung sehr zeitaufwendig sind.

Demzufolge liegt der Erfindung die Aufgabe zugrunde, einen Füllanschluß für Gasflaschenventile zu schaffen, mit dem die Befüllung beschleunigt werden kann.

Diese Aufgabe wird gelöst durch einen Füllanschluß gemäß den Merkmalen des Anspruches 1. Bevorzugte Ausbildungen sind Gegenstand der Unteransprüche.

Durch die Anordnung eines gesonderten, nach oben weisenden Befüllstutzens an dem Gasflaschenventil zusätzlich zu dem seitlichen Entnahmeanschluß kann eine Schnellanschlußkupplung als Füllkupplung angesetzt werden, wobei das Handrad des Gasflaschenventils für die Befüllung nicht separat geöffnet werden muß. Es wird somit eine gesonderte Gasbefüllpassage geschaffen, die im wesentlichen von dem Entnahmedurchlaß unabhängig ist, wobei auch beide Passagen in eine gemeinsame Durchlaßbohrung münden können, jedoch strömungstechnisch sowohl beim Befüllvorgang als auch beim Entnahmebetrieb, insbesondere durch gegeneinander geschaltete Rückschlagventile getrennt sind.

Von wesentlichem Vorteil ist hierbei, daß das seitlich angeordnete Handrad des Gasflaschenventils für die Befüllung nicht mehr geöffnet werden braucht, sowie auch nach Beendigung des Befüllvorganges nicht wieder geschlossen werden braucht. Somit werden zwei Arbeitsgänge eingespart, so daß die Befüllung von Gasflaschen wesentlich beschleunigt wird. Dies gilt insbesondere für die automatisierte Befüllung mit Robotern, da der nach oben weisende Befüllstutzen auch in einer dicht gepackten Gasflaschen-Palette optimal zugänglich ist.

Hierdurch ist auch die Simultanbefüllung mehrerer Gasflaschen mittels einer Mehrfach-Füllkupplung möglich, z.B. gleichzeitig für zwölf Gasflaschen auf einer Palette, auf die die Mehrfach-Füllkupplung mit zwölf Befüllkupplungen von oben her aufsetzbar ist. Hierdurch läßt sich der Befüllvorgang wesentlich beschleunigen.

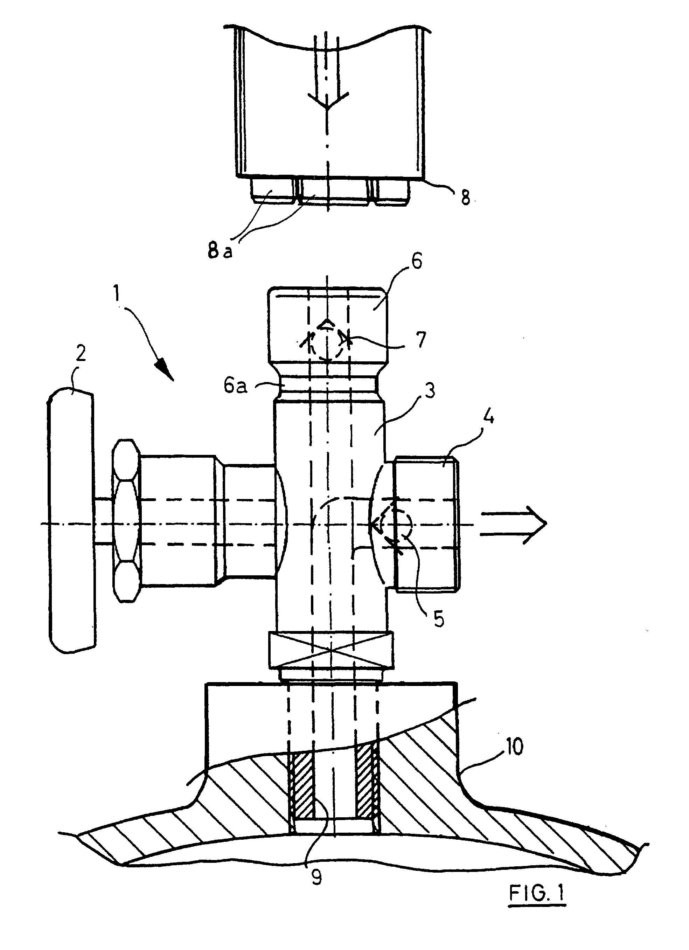

Nachfolgend wird ein Ausführungsbeispiel anhand der einzigen Zeichnung (Fig. 1) näher erläutert und beschrieben.

In Fig. 1 ist ein Gasflaschenventil 1 mit einem Handrad als Betätigungselement 2 und einem Ventilkörper 3 schematisch dargestellt. Der Ventilkörper 3 des Gasflaschenventils 1 wird an eine Gasflasche 10 (z. B. für Azetylen, Sauerstoff, Kohlendioxid, Wasserstoff oder dergleichen) in üblicher Weise durch Schraubverbindung angeschlossen.

Am Ventilkörper 3 ist bevorzugt einstückig ein seitlicher Entnahmeanschluß 4 ausgebildet, der entsprechend der Norm für das jeweilige Gas einen entsprechenden Gewindeanschluß aufweist. Innerhalb des Entnahmeanschlusses 4 ist ein federbelastetes Rückschlagventil 5 angeordnet, das entsprechend dem eingezeichneten Pfeil nur die Gasentnahme erlaubt, in entgegengesetzter (Füll-) Richtung jedoch sperrend ist.

Neuerungsgemäß ist an dem Ventilkörper 3, bevorzugt rechtwinklig zu dem Entnahmeanschluß 4, ein gesonderter Befüllstutzen 6 angeordnet. Der Befüllstutzen 6 kann als separates Bauteil in dem Ventilkörper 3 eingeschraubt sein oder auch, wie dargestellt, einstückig wie der Entnahmeanschluß 4 mit dem Ventilkörper 3 ausgebildet sein. Am Außenmantel des nach oben weisenden Befüllstutzens 6 ist eine Ringnut 6a ausgebildet, in die Rastelemente 8a einer von oben aufsetzbaren Füllkupplung 8 angeschlossen werden können.

Die Füllkupplung 8 ist bevorzugt als Steckkupplung mit Spannzangen gemäß der EP-A-0 340 879 oder der DE-A-35 18 019 ausgebildet, da bei diesen Schnellanschlußkupplungen des Anmelders die entsprechenden Sicherheitsvorkehrungen für die Befüllung von Gasflaschen vorgesehen sind. Es kann jedoch als Füllkupplung 8 für ein Außenprofil oder ggf. auch ein Inneneingriffsprofil eine Kugelrastkupplung verwendet werden, wie diese grundsätzlich aus Hydraulikanschlüssen bekannt ist.

In dem Befüllstutzen 6 ist ebenfalls ein federbelastetes Rückschlagventil 7 angeordnet, und zwar in der strichliert eingezeichneten Befüllbohrung innerhalb des Befüllstutzens 6. Der Befüllstutzen 6 mündet ebenso wie der Entnahmeanschluß 4 in eine Durchlaßbohrung 9, die mit der Gasflasche 10 in Verbindung steht. Im Bereich der Durchlaßbohrung 9 ist ein hier nicht näher dargestellter Ventilschieber angeordnet, der mittels des Handrades 2 in die Schließ- oder die Offenstellung gebracht werden kann.

In der Offenstellung des Ventilschiebers steht die Durchlaßbohrung 9 mit dem Entnahmeanschluß 4 in Verbindung, so daß Gas entnommen werden kann, während der Befüllstutzen 6 durch das Rückschlagventil 7 abgekoppelt ist. Nach weitgehender Entleerung der Gasflasche 10 wird das Gasflaschenventil 1 mittels des Handrades 2 geschlossen und dann zum Befüllbetrieb gebracht. Es kann jedoch auch eine Befüllung vor Ort z.B. aus einem Tankfahrzeug vorgesehen sein, wobei dann ebenfalls die Füllkupplung 8 auf den Befüllstutzen 6 von oben her aufgesteckt und die jeweilige Gasflasche 10 befüllt wird.

Bei diesem Befüllbetrieb bleibt der Ventilschieber geschlossen, so daß im Gegensatz zu den bekannten Vorrichtungen das Handrad 2 nicht mehr betätigt werden braucht, insbesondere auch nach Abschluß des Befüllvorganges das Handrad 2 nicht wieder in entgegengesetzte Richtung betätigt werden muß. Vielmehr braucht lediglich die Füllkupplung 8 abgenommen werden. Dabei können sogar bei Befüllung vor Ort die jeweiligen an dem Entnahmeanschluß 4 befestigten Gasleitungen angeschlossen bleiben.

Der Befüllstutzen 6 weist zudem bevorzugt eine firmen- und/oder benutzerspezifische Form auf, so daß nur entsprechend passende Füllkupplungen 8 angeschlossen werden können. Hierdurch wird sichergestellt, daß nur befugte Personen die Befüllung der Gasflasche 10 vornehmen können. Durch das in dem seitlichen Entnahmeanschluß 4 vorgesehene federbelastete Rückschlagventil 5 wird zudem zuverlässig vermieden, daß eine Befüllung über den Entnahmeanschluß 4 erfolgt.

Zudem wird durch dieses Rückschlagventil 5 ermöglicht, daß die Gasflasche einen gewissen Restdruck aufrechterhält, wie dieser für den Betrieb diverser Anlagen erforderlich bzw. zur Vermeidung von Lufteintritt in die Gasflasche 10 erwünscht ist. Dadurch wird das zeitaufwendige Evakuieren der Gasflasche 10 beim Wiederbefüllen vermieden.

Der Befüllvorgang kann zudem weitgehend automatisiert werden, da der nach oben weisende Befüllstutzen 6 gut zugänglich ist, insbesondere auch für Handhabungsvorrichtungen oder Roboter, mit denen die Füllkupplung 8 von oben her aufsteckbar ist. Dabei kann auch eine Mehrfach-Befüllstation verwendet werden, bei der die einzelnen Füllkupplungen 8 in dem jeweiligen Raster hängend angeordnet sind, wie die Gasflaschen 10 auf einer Palette fixiert sind.

## Patentansprüche

1. Füllanschluß für Gasflaschenventile, insbesondere an Azetylenflaschen, mit einem Betätigungselement (2) und einem Entnahmeanschluß (4) am Ventilkörper (3) des Gasflaschenventils (1), wobei zusätzlich zum Entnahmeanschluß (4) am Ventilkörper (3) ein sich in dessen Längsrichtung erstreckender Befüllstutzen (6) vorgesehen ist,
**dadurch gekennzeichnet, daß**
das Betätigungselement (2) dem Entnahmeanschluß (4) gegenüberliegend und seitlich am Ventilkörper (3) angeordnet ist.

2. Füllanschluß nach Anspruch 1, **dadurch gekennzeichnet, daß** der Entnahmeanschluß (4) und der Befüllstutzen (6) zueinander rechtwinklig am Ventilkörper (3) angeordnet sind.

3. Füllanschluß nach Anspruch 1 oder 2, **dadurch gekennzeichnet, daß** in dem Entnahmeanschluß (4) ein federbelastetes Rückschlagventil (5) eingesetzt ist, das in Füllrichtung sperrend ist.

4. Füllanschluß nach einem der Ansprüche 1 bis 3, **dadurch gekennzeichnet, daß** der Entnahmeanschluß (4) und der Befüllstutzen (6) in eine gemeinsame Durchlaßbohrung (9) im Ventilkörper (3) münden.

5. Füllanschluß nach einem der Ansprüche 1 bis 4, **dadurch gekennzeichnet, daß** der Entnahmeanschluß (4) und der Befüllstutzen (6) einstückig mit dem Ventilkörper (3) ausgebildet sind.

6. Füllanschluß nach einem der Ansprüche 1 bis 4, **dadurch gekennzeichnet, daß** der Befüllstutzen (6) in den Ventilkörper (3) eingesetzt, insbesondere eingeschraubt ist.

7. Füllanschluß nach einem der Ansprüche 1 bis 6, **dadurch gekennzeichnet, daß** der Befüllstutzen (6) eine äußere Ringnut (6a) zum Eingriff einer Füllkupplung (8) aufweist.

8. Füllanschluß nach einem der Ansprüche 1 bis 7, **dadurch gekennzeichnet, daß** der Befüllstutzen (6) zur Kodierung eine firmen-/benutzerspezifische Form aufweist.

9. Füllanschluß nach einem der Ansprüche 1 bis 8, **dadurch gekennzeichnet, daß** in dem Befüllstutzen (6) wenigstens ein Ventil, insbesondere ein federbeaufschlagtes Rückschlagventil (7) eingesetzt ist, das in Entnahmerichtung sperrend ist.

## Claims

1. Filling connection for gas bottle valves, especially on acetylene cylinders, with an actuating element (2) and a discharge connection (4) on the valve body (3) of the gas bottle valve (1), wherein in addition to the discharge connection (4) a filling union (6) is provided on the valve body (3), extending in its longitudinal direction,
**characterized in that**
the actuating element (2) is arranged opposite the discharge connection (4) and at the side on the valve body (3).

2. Filling connection according to claim 1, **characterized in that** the discharge connection (4) and the filling union (6) are arranged at right angles to one another on the valve body (3).

3. Filling connection according to claim 1 or 2, **characterized in that** a spring-biased check valve (5) is fitted in the discharge connection (4) and blocks in the filling direction.

4. Filling connection according to any of claims 1 to 3, **characterized in that** the discharge connection (4) and the filling union (6) open into a common through bore (9) in the valve body (3).

5. Filling connection according to any of claims 1 to 4, **characterized in that** the discharge connection (4) and filling union (6) are formed in one piece with the valve body (3).

6. Filling connection according to any of claims 1 to 4, **characterized in that** the filling union (6) is fitted in the valve body (3), especially screwed in.

7. Filling connection according to any of claims 1 to 6, **characterized in that** the filling union (6) has an outer annular groove (6a) for engagement of a filling coupling (8).

8. Filling connection according to any of claims 1 to 7, **characterized in that** the filling union (6) has a company/user specific form for coding.

9. Filling connection according to any of claims 1 to 8, **characterized in that** at least one valve, in particular a spring-biased check valve (7) is fitted in the filling union (6) and blocks in the discharge direction.

## Revendications

1. Raccordement de remplissage destiné à une valve de bouteille de gaz, tout particulièrement des bouteilles remplies d'acétylène, doté d'un élément de commande (2) et d'un raccordement de soutirage (4) situés sur le corps de valve (3) de la valve de la bouteille de gaz (1), une tubulure de remplissage (6) s'étendant longitudinalement étant prévue sur le corps de valve (3) en plus du raccordement de soutirage (4), **caractérisé en ce que** l'élément de commande (2) est agencé de façon à être opposé au raccordement de soutirage (4) et sur une partie latérale du corps de valve (3).

2. Raccordement de remplissage selon la revendication 1, **caractérisé en ce que** le raccord de soutirage (4) et la tubulure de remplissage (6) sont agencés l'un par rapport à l'autre sur le corps de valve (3)de façon à former un angle droit.

3. Raccordement de remplissage selon la revendication 1 ou 2, **caractérisé en ce qu'**une soupape de non-retour commandée par ressort (5) et constituant un barrage dans la direction de remplissage est insérée dans le raccordement de soutirage (4).

4. Raccordement de remplissage selon l'une des revendications 1 à 3, **caractérisé en ce que** le raccordement de soutirage (4) et la tubulure de remplissage (6) débouchent dans un trou de passage (9) commun situé dans le corps de valve (3).

5. Raccordement de remplissage selon l'une des revendications 1 à 4, **caractérisé en ce que** le raccord de soutirage (4) et la tubulure de remplissage (6) sont conçus pour former une seule et même pièce avec le corps de valve (3).

6. Raccordement de remplissage selon l'une des revendications 1 à 4, **caractérisé en ce que** la tubulure de remplissage (6) est insérée, et tout particulièrement vissée, dans le corps de valve (3).

7. Raccordement de remplissage selon l'une des revendications 1 à 6, **caractérisé en ce que** la tubulure de remplissage (6) présente une gorge de retenue extérieure (6a) permettant de mettre en prise un raccord de remplissage (8).

8. Raccordement de remplissage selon l'une des revendications 1 à 7, **caractérisé en ce que** la tubulure de remplissage (6) présente pour le codage une forme spécifique à l'entreprise ou à l'utilisateur.

9. Raccordement de remplissage selon l'une des revendications 1 à 8, **caractérisé en ce qu'**au moins une valve, tout particulièrement une soupape anti-retour commandée par ressort (7), est insérée dans la tubulure de remplissage (6), laquelle valve constitue un barrage dans la direction de soutirage.
